# EUROPÄISCHE PATENTANMELDUNG

(11) **EP 0 841 567 A1**
(43) Veröffentlichungstag der Anmeldung: **13.05.1998**
(21) Anmeldenummer: 97119501.1
(22) Anmeldetag: 07.11.1997
(51) Int. Cl.: G01N 37/00, G01N 30/86

(54) **Verfahren zum Vergleich von Peakdarstellungen, insbesondere von Westernblot- oder Dot Blot-Streifen**

(30) Priorität: 12.11.1996 DE 19646720
(71) Anmelder: Matallana Kielmann, Ina, 72764 Reutlingen (DE)
(72) Erfinder: Matallana Kielmann, Ina, 72764 Reutlingen (DE)
(74) Vertreter: Castell, Klaus, Dr.

(57) **Zusammenfassung**

Für eine Referenzprobe und eine Untersuchungsprobe werden die Steigungslinien der Peaklinien ermittelt und miteinander verglichen, um Peaklinien unabhängig vom Hintergrund zu analysieren. Vorzugsweise wird mit einer Schwellenprobe eine Minimalamplitude einer Steigungslinie festgelegt, um Schwingungen mit einer kleineren Amplitude unberücksichtigt zu lassen. Das Verfahren eignet sich vor allem zur automatischen Analyse von Blot's.

## Beschreibung

Die Erfindung betrifft ein Verfahren zum Vergleich von Peak-Darstellungen, insbesondere von Westernblot- oder Dot Blot-Streifen.

Bei vielen technischen Anwendungen, insbesondere analytischen Verfahren müssen Peakdarstellungen miteinander verglichen werden, um aus dem Vergleich der Darstellungen auf ein bestimmtes Ergebnis zu schließen. Dies ist ein besonders aufwendiges Verfahren, da bei Peakdarstellungen Position, Höhe und Fläche beider zur vergleichender Peakdarstellungen ermittelt werden müssen, um eine Aussage über deren Ähnlichkeit abgeben zu können.

Derartige Peakdarstellungen entstehen bspw. bei der Gaschromatographie. Ein häufiges Anwendungsgebiet des Vergleichs von Peakdarstellungen liegt aber im Vergleich von chromatographischen oder elektrophoretisch eingefärbten Streifen, deren Streifenmuster über einen optischen Sensor erfaßt wird. Diese Streifen werden als Blots und insbesondere als Westernblots oder Dot Blots bezeichnet, wenn Antikörperreaktionen auf dem Streifen durch unterschiedliche Banden angezeigt werden.

Ein besonderes Problem beim Vergleich von Peakdarstellungen liegt darin, daß die Grundlinie, auf die die Peakdarstellungen aufbauen, häufig Schwankungen unterliegt, wenn bspw. ein Wester Blot-Streifen, dessen Streifenmuster eingescannt wurde, eine gewisse Grundfärbung aufweist. Derartige Unterschiede in der Grundfarbe des Streifens treten bspw. bei Streifen unterschiedlicher Hersteller auf. Sie können jedoch auch auf unterschiedliche Behandlungschargen oder durch unterschiedliche Lagerung der Streifen entstehen.

Der Erfindung liegt daher die Aufgabe zugrunde, ein Verfahren zum Vergleich von Peakdarstellungen vorzuschlagen, mit dem die beschriebenen Ungenauigkeiten eliminiert werden.

Diese Aufgabe wird mit einem gattungsgem. Verfahren gelöst, bei dem für eine erste Probe die Steigungslinie der Peaklinie ermittelt wird, für eine zweite Probe die Steigungslinie der Peaklinie ermittelt wird und die Steigungslinien der Proben miteinander verglichen werden.

Der Erfindung liegt die Erkenntnis zugrunde, daß ein Vergleich der Peakflächen zu erheblichen Ungenauigkeiten führen kann und dieses Problem wird dadurch gelöst, daß jeweils die Ableitung der Peaklinien gebildet wird und die ermittelten Schwingungen der Steigungslinien miteinander verglichen werden. Diese Schwingungen sind unabhängig vom Hintergrund und geben somit einen verläßlichen Wert, selbst wenn die beiden zu vergleichenden Peakdarstellungen unterschiedliche Hintergrundfärbungen aufweisen.

Ein besonders günstiger Einsatzbereich des erfindungsgemäßen Verfahrens liegt, darin, daß die erste Probe einer Referenzprobe und die zweite Probe eine Untersuchungsprobe ist. Die Unabhängigkeit vom Hintergrund erlaubt es, einmalig eine Referenzprobe zu ermitteln und diese Referenzprobe mit unterschiedlichen Untersuchungsproben zu vergleichen. Selbst wenn die Untersuchungsproben im Laufe längerer Untersuchungszeiträume von Untersuchungsstreifen mit unterschiedlicher Grundfärbung stammen, muß nicht zu jeder Grundfärbung eine extra Referenzprobe angefertigt werden, sondern eine einmal ermittelte Referenzprobe kann mit allen Untersuchungsproben verglichen werden, ohne daß unterschiedliche Hintergrundsfärbungen zu Fehlern im Befund führen.

Die zu untersuchenden Peaklinien werden vorzugsweise durch das Scannen eines Untersuchungsstreifens ermittelt. Dabei werden die Untersuchungsstreifen bspw. durch einen optischen Sensor erfaßt und digitalisiert. Ein Beispiel für einen solchen Detektor bildet ein Flachbettscanner.

Um aus der Peaklinie die Steigungslinie zu ermitteln, wird vorgeschlagen, daß die Steigung als Kontraständerung mit einer Bildverarbeitungseinrichtung ermittelt wird. Derartige Programme zur Ermittlung des Kontrastes sind bekannt und können für das erfindungsgem. Verfahren eingesetzt werden.

Um übliche, unrelevante Kontraständerungen, die auf Unsauberkeiten oder Systemfehler zurückzuführen sind, zu eliminieren, können Schwingungen der Steigungslinie, deren Amplitude unter einem bestimmten Wert liegt, beim Vergleich der Steigungslinien unberücksichtigt bleiben. Der Minimalwert einer zu berücksichtigenden Amplitdude der Steigungslinie kann einmalig festgelegt oder variabel eingestellt werden.

Um diesen minimalen Amplitudenwert festzulegen, wird vorgeschlagen, daß für eine Schwellenprobe die Steigungslinie der Peaklinie und die Amplitude der Steigungslinie ermittelt wird und auf der zweiten Probe alle Schwingungen mit einer geringeren Amplitude der Steigungslinie unberücksichtigt bleiben. Dies erlaubt es, den Grenzwert der Amplitude auf einfache Art und Weise mittels einer Schwellenprobe festzulegen.

Eine Möglichkeit der Auswertung des erfindunsgem. Vergleichs, besteht darin, aus Position und Art der Schwingungen der Steigungslinien einen Datensatz zu ermitteln. Diese Werte können durch Filtersysteme ermittelt werden, wobei die Position, die Amplitude und vorzugsweise auch die Frequenz der untersuchten Schwingungen im Datensatz festgehalten werden.

Ein alternatives Verfahren zur Ermittlung eines Datensatzes liegt darin, daß die Schwingungen der Steigungslinien durch einen Mustervergleich miteinander verglichen werden und ein Datensatz zur Übereinstimmung ermittelt wird. Ein Mustervergleich, der bspw. durch Filter-, Neuronale oder Fuzzysysteme bestimmt werden kann, erlaubt es, einen Datensatz mit sehr genauen Werten zur Übereinstimmung zwischen den verglichenen Proben zu ermitteln.

Die Erfindung sieht weiter vor, daß dem so ermittelten Datensatz ein Befundvorschlag zugeordnet wird. Der Befundvorschlag führt zu einer Beurteilung des durch das erfindungsgem. Verfahren ermittelten Datensatzes, die direkt in der Praxis verwendet werden kann.

Um das Verfahren besonders anwenderfreundlich zu gestalten, wird letztlich vorgeschlagen, daß der Datensatz mit einem Parser in einen Befundtext, vorzugsweise mit Grafik, übertragen wird. Dies führt dazu, daß der Anwender des erfindungsgem. Verfahrens einen automatisch erstellten Text erhält, in dem der Vergleich der Peakdarstellungen beschrieben und vorzugsweise das ermittelte Ergebnis auch bewertet wird.

Ein Ausführungsbeispiel des erfindungsgem. Verfahrens ist in der Zeichnung dargestellt und wird im folgenden näher beschrieben.

Es zeigt
- Figur 1: einen Untersuchungsstreifen, eine Peakdarstellung und eine Steigungslinie einer Referenzprobe,
- Figur 2: einen Untersuchungsstreifen, eine Peakdarstellung und eine Steigungslinie einer Schwellenprobe,
- Figur 3: einen Untersuchungsstreifen, eine Peakdarstellung und eine Steigungslinie einer Untersuchungsprobe und
- Figur 4: eine schematische Darstellung des Verfahrens.

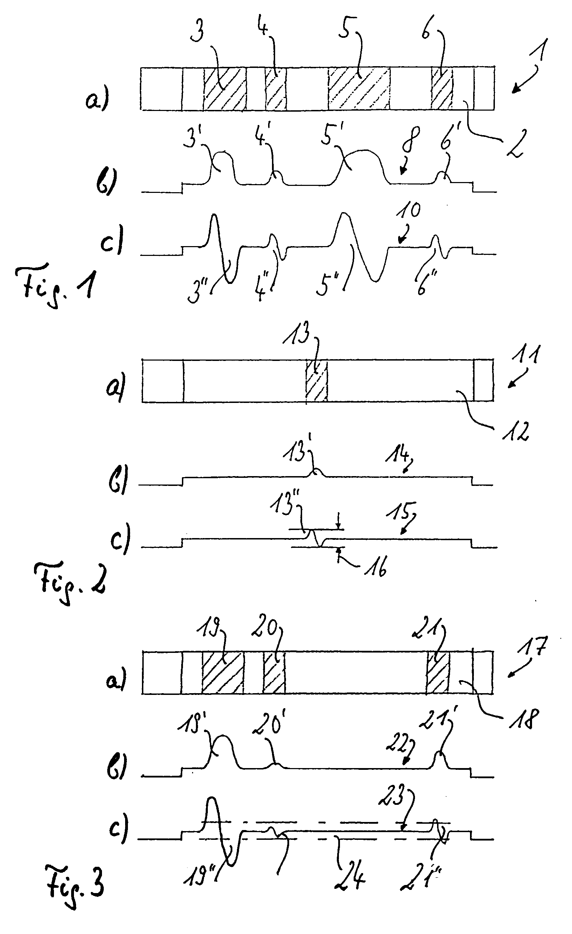

Die in Figur 1a gezeigte erste Probe 1 ist eine Referenzprobe, bei der auf einem Referenzstreifen 2 durch Antikörperreaktionen farblich sich vom Untergrund abhebende Banden 3, 4, 5, 6 erzeugt wurden.

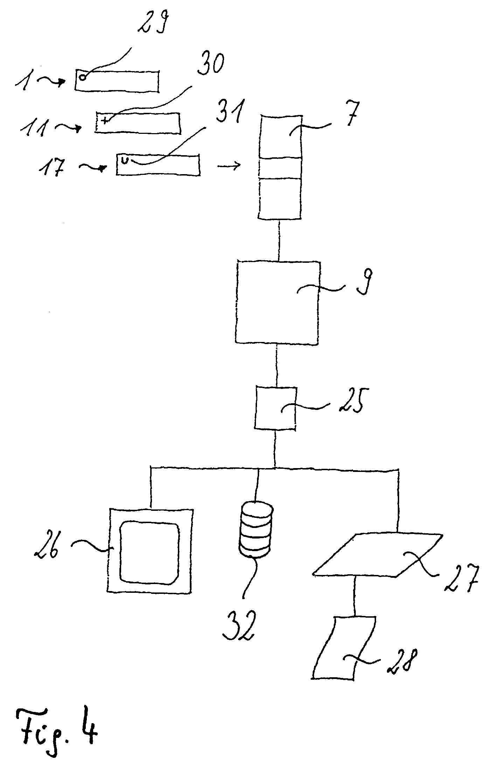

Wenn diese Referenzprobe 1 mit einem Scanner 7 (vgl. Fig. 4) analysiert wird, ermittelt dieser eine Peaklinie 8, die in Figur 1b dargestellt ist. Dabei ist jeder Bande 3, 4, 5, 6 ein Peak 3', 4', 5', 6' zugeordnet.

Aus der Peaklinie 8 wird mittels eines Rechners 9 (vgl. Fig. 4) eine Steigungslinie 10 berechnet, die in Figur 1c dargestellt ist. Auf der Steigungslinie 10 entspricht jeder Bande 3, 4, 5, 6 auf der Referenzprobe 1 eine Schwingung 3'', 4'', 5'', 6''.

Zur Festlegung eines Schwellenwertes dient eine Schwellenprobe 11, die in Figur 2a gezeigt ist. Diese Probe hat eine irgendwo auf dem Schwellenstreifen 12 angeordnete Bande 13, deren Kontraständerung zum Hintergrund so festgelegt ist, daß sie die minimale Kontraständerung angibt, die notwendig ist, um mit Sicherheit auf eine Immunreaktion schließen zu können. Diese Schwellenprobe 11 kann ebenfalls durch den Scanner 7 hindurchgeführt werden, um eine Peaklinie 14 zu ermitteln, die in Figur 2b gezeigt ist. Auf dieser Peaklinie 14 entspricht der Bande 13 ein Peak 13'. Mittels des Rechners 9 (vgl. Fig. 4) wird auch diese Peaklinie 14 in eine Steigungslinie 15 umgerechnet. Diese Steigungslinie 15 ist in Figur 2c dargestellt und auf ihr entspricht der Bande 13 eine Schwingung 13'' mit einer Amplitude 16.

Die ermittelte Steigungslinie 10 der Referenzprobe 1 und die ermittelte Amplitude 16 der Schwellenprobe 11 werden im Rechner 9 gespeichert und später zur Bewertung einer zweiten Probe 17, der Untersuchungsprobe, verwendet.

Als Untersuchungsprobe 17 ist in Figur 3a ein Untersuchungsstreifen 18 abgebildet, der drei durch Immunkörperrekationen entstandene Banden 19, 20, 21 aufweist. Auch der Untersuchungsstreifen 19 wird als Untersuchungsprobe 17 durch den Scanner 7 geführt, um die Peaklinie 22, die in Figur 3b dargestellt ist, zu ermitteln. Die Peaklinie 22 weist drei Peaks 19', 20' und 21' auf, die den Banden 19, 20 und 21 auf dem Untersuchungsstreifen entsprechen.

Aus der Peaklinie 22 wird mit dem Rechner 9 eine Steigungslinie 23 berechnet, die in Figur 3c abgebildet ist. Auf der Steigungslinie 23 entspricht der Bande 19 eine Schwingung 19'', der Bande 20 eine Schwingung 20'' und der Bande 21 eine Schwingung 21''. Entsprechend der in Figur 2c angegebenen Amplitude 16 ist in Figur 3c ein Schwingungsbereich 24 durch strichpunktierte Linien begrenzt. Schwingungen, wie die Schwingung 20'', die innerhalb des Schwingungsbereiches 24 liegen, liegen unterhalb der durch die Schwellenprobe 11 festgelegten Schwelle und werden beim Vergleich der Steigungslinie 23 der Untersuchungsprobe 17 mit der Steigungslinie 10 der Referenzprobe 1 nicht berücksichtigt.

Nach Ermittlung der Steigungslinie 23 der Untersuchungsprobe 17 wird die Steigungslinie 23 mit der Steigungslinie 10 der Referenzprobe 1 durch einen im Rechner 9 vorgenommenen Mustervergleich verglichen. Schwingungen 20'', die innerhalb des Schwingungsbereiches 24 liegen, werden nicht berücksichtigt und Schwingungen 19'', 21',' die einer Schwingung 3'', 6'' auf der Steigungslinie 10 der Referenzprobe 1 entsprechen, werden als Datensatz einem Parser 25 übermittelt, der den Datensatz in einen Befundtext überträgt. Dieser Befundtext kann entweder über einen Bildschirm 26 angezeigt werden, mittels eines Druckers 27 als Protokoll 28 ausgegeben werden oder auf einem Speicher 32, wie z. B. einer Festplatte gespeichert werden.

Zur besseren Zuordnung und zur Übertragung weiterer Informationen sind auf den Streifen 1, 11 und 17 Markierungen, wie Zeichen und Beschriftungen 29, 30, 31 vorgesehen, die mit dem Scanner 7 eingelesen und in den Datensatz aufgenommen werden. Diese Markierungen können entweder zur Erstellung des Befundtextes verwendet werden oder der Erkennung der unterschiedlichen Streifenarten dienen.

## Patentansprüche

1. Verfahren zum Vergleich von Peak-Darstellungen, insbesondere von Western Blot- oder Dot Blot Streifen (2, 18),
- bei dem für eine erste Probe (1) die Steigungslinie (10) der Peaklinie (8) ermittelt wird,
- für eine zweite Probe (17) die Steigungslinie (23) der Peaklinie (22) ermittelt wird und
- die Steigungslinien (10, 23) der Proben (1, 17) miteinander verglichen werden.

2. Verfahren nach Anspruch 1, **dadurch gekennzeichnet**, daß die erste Probe (1) eine Referenzprobe und die zweite Probe (17) eine Untersuchungsprobe ist.

3. Verfahren nach einem der vorhergehenden Ansprüche, **dadurch gekennzeichnet**, daß die Peaklinien (8, 22) durch das Scannen eines Streifens (2, 18) ermittelt werden.

4. Verfahren nach Anspruch 3, **dadurch gekennzeichnet**, daß Markierungen (29, 30, 31), wie Beschriftungen oder Zeichen, durch Scannen vom Streifen ermittelt werden.

5. Verfahren nach einem der vorhergehenden Ansprüche, **dadurch gekennzeichnet**, daß die Steigungslinien (10, 15, 23) als Kontraständerung mit einer Bildverarbeitungseinrichtung (7, 9) ermittelt werden.

6. Verfahren nach einem der vorhergehenden Ansprüche, **dadurch gekennzeichnet**, daß für eine Schwellenprobe (11) die Steigungslinie (15) der Peaklinie (14) und die Amplitude (16) der Steigungslinie (15) ermittelt wird und auf der zweiten Probe (17) alle Schwingungen (20'') mit einer geringeren Amplitude der Steigungslinie (23) unberücksichtigt bleiben.

7. Verfahren nach einem der vorhergehenden Ansprüche, **dadurch gekennzeichnet**, daß aus Position und Art der Schwingungen (3'', 4'', 5'', 6''; 19'', 20'', 21'') der Steigungslinien (10; 23) ein Datensatz ermittelt wird.

8. Verfahren nach einem der Ansprüche 1 bis 6, **dadurch gekennzeichnet**, daß die Schwingungen (3'', 4'', 5'', 6''; 19'', 20'', 21'') der Steigungslinien (10; 23) durch einen Mustervergleich miteinander verglichen werden und ein Datensatz zur Übereinstimmung ermittelt wird.

9. Verfahren nach Anspruch 7 oder 8 **dadurch gekennzeichnet**, daß dem Datensatz ein Befundvorschlag zugeordnet wird.

10. Verfahren nach einem der Ansprüche 7 bis 9, **dadurch gekennzeichnet**, daß der Datensatz mit einem Parser (25) in einen Befundtext, vorzugsweise mit Grafik übertragen wird.
